# EUROPÄISCHE PATENTSCHRIFT

(11) **EP 3 895 542 B1**
(45) Veröffentlichungstag und Bekanntmachung des Hinweises auf die Patenterteilung: **12.06.2024**
(21) Anmeldenummer: 21167950.1
(22) Anmeldetag: 12.04.2021
(51) Int. Cl.: A23C 19/09

(54) **KÄSE AUS ZWEI KÄSEMASSEN UND VERFAHREN ZUR HERSTELLUNG DAVON**
CHEESE FROM TWO CHEESE MASSES AND METHOD FOR PRODUCING THE SAME
FROMAGE À PARTIR DE DEUX MASSES DE FROMAGES ET PROCÉDÉ DE FABRICATION ASSOCIÉ

(30) Priorität: 14.04.2020 CH 4432020
(43) Veröffentlichungstag der Anmeldung: 20.10.2021
(73) Patentinhaber: Biosphäre Markt AG, 6162 Entlebuch (CH)
(72) Erfinder: EPP, René, 6170 Schüpfheim (CH)
(74) Vertreter: Prins Intellectual Property AG

(56) Entgegenhaltungen:
- EP-A1- 2 238 838
- EP-A2- 0 713 649
- DE-U1- 7 710 457
- DE-U1- 7 737 795
- GB-A- 2 312 368
- DATABASE GNPD [Online] MINTEL; 3. Oktober 2018 (2018-10-03), anonymous: "Mozzarella Cheese with Requeijão and Cheddar Filling", XP055773570, Database accession no. 6019133
- DATABASE GNPD [Online] MINTEL; 12. April 2011 (2011-04-12), anonymous: "Breaded Mozzarella with Melting Cheese Filling", XP055773574, Database accession no. 1532545

## Beschreibung

### Technisches Gebiet

Die Erfindung betrifft ein Verfahren zur Herstellung eines Käse aus zwei mit unterschiedlicher Rezeptur fabrizierter Käsemassen.

### Technischer Hintergrund

Von der FAO/WHO wurde Käse folgendermassen definiert: Käse ist ein frisches oder gereiftes Erzeugnis, welches nach der Dicklegung von Milch, Rahm, Magermilch, Buttermilch oder einer Mischung dieser Produkte unter Abziehen von Molke hergestellt wird.

Käse enthält abhängig vom jeweiligen Käsetyp (Hart-, Halbhart-, Weich- oder Frischkäse) Eiweiss, Fett, Wasser und Salze in unterschiedlichen Konzentrationen. Im Laufe der Zeit wurde eine grosse Anzahl verschiedener Käsetypen entwickelt, die sich voneinander durch Aussehen, Geruch, Geschmack, Konsistenz, Trockensubstanz und Haltbarkeit unterscheiden. Bei der Käseherstellung kann die Milch über Säuerung, enzymatisch durch Lab oder durch Beides dickgelegt werden.

Bei der Käseherstellung werden einige Prozessschritte durchgeführt, die für alle Käsetypen gleich sind. Einzelne Behandlungsstufen sind jedoch für bestimmte Käsetypen charakteristisch. Die wichtigsten Prozessschritte, welche dem Stand der Technik entsprechen sind nachfolgend aufgeführt.

Die sogenannte Kesselmilch wird vorbehandelt, gegebenenfalls vorgesäuert und mit Lab versetzt. Die so dickgelegte Milch wird mit speziellen Schneidewerkzeugen in Würfel unterschiedlicher Grösse geschnitten, es entsteht der Käsebruch. Bei der weiteren Bruchbearbeitung wird der Bruch gerührt und gleichzeitig nach einer vorgegebenen Rezeptur auf bestimmte Temperaturen erwärmt. Dabei tritt Synärese auf, d.h die Bruchkörner ziehen sich zusammen und geben Molke ab. Der derart behandelte Käsebruch gelangt in Käseformen aus Metall, Holz oder Kunststoff, welche die Grösse und Form des fertigen Käses bestimmen. Er wird entweder durch sein eigenes Gewicht oder durch Pressen zu einem Käselaib geformt, wobei die Charakteristika des Käselaibs im Wesentlichen über die Bruchherstellung und das Pressen bestimmt werden. Der Wassergehalt des fertigen Käse wird vorwiegend durch diese Bruchbearbeitung, das Wärmen und die Milchsäuregärung gesteuert (Synärese).

Für einen weichen Käse wird üblicherweise ein grobes Bruchkorn verwendet, welches wenig bis gar nicht gewärmt wird. Der Verkäsungsprozess wird dadurch auch kürzer. Beim Hartkäse wird typischerweise kleines Bruchkorn verwendet, welches mit Brennen, längerem Ausrühren des Käsebruches und intensivem Pressen weiterverarbeitet wird.

Neben den bereits erwähnten Prozessschritten wird der Charakter des Käses durch den Einsatz der Milchsäurebakterien und deren Enzyme sowie das Salzen, Lagern und Verpacken beeinflusst.

Die meisten Käse bestehen aus einer mehr oder weniger homogenen Käsemasse, welche durchgehend eine mehr oder weniger gleiche Konsistenz aufweisen.

Um Sensorik, Geschmack und Konsistenz des Käse zu beeinflussen, werden manchmal Zutaten wie Kräuter, etc. bei der Herstellung des Käsebruchs beigemischt. Mit diesem Verfahren sind die Zutaten im ganzen Käse fein verteilt. Wenn die Zutaten während dem Abfüllprozess an den Rand des Käses «geschwemmt» werden, führt dies zu Problemen während der Käsereifung (Narbenbildung und Verfärbung, Gefahr von Infektionen).

Ein Sauermilchkäse ist ein gereifter Käse, der aus Sauermilchquark mittels Reifungsmitteln, Salzen und anderen Zugaben hergestellt wird. Harter Sauermilchkäse hat anfangs eine krümelige, quarkähnliche Festigkeit, die sich im Verlauf der sehr kurzen Reifung von außen nach innen in eine kompakt-elastische verwandelt. Bei einem jungen Käse ist daher häufig ein deutlicher Kern aus Sauermilchquark vorhanden.

Es sind auch nachbearbeitete Käse bekannt, bei den zwei Käsemassen resp. Käse mit unterschiedlicher Rezeptur kombiniert werden. Bei einem sog. Mozzaricca oder Burrata werden während der Mozzarellaproduktion noch nicht ganz abgekühlte Mozzarellakugeln mit Rahm oder Ricotta gefüllt, von Hand in ein Tuch verknotet und dann weiter abgekühlt und verpackt.

Aus CH709656 ist ein Verfahren zur Herstellung eines Käse mit einer Füllung bekannt. Dabei wird zuerst ein Käselaib so hergestellt und gereift bis ein Halbhartkäse oder Hartkäse vorliegt. Der gereifte Käselaib wird in Schichten geschnitten, die voneinander getrennt werden. Jeweils in einer unteren Schicht wird innerhalb eines entlang des Umfangs geschlossenen Randbereichs einer oberen Kontaktfläche eine Vertiefung ausgebildet. In diese Vertiefung wird eine Füllung mit einer gewünschten Zusammensetzung eingefüllt. Nach dem Einfüllen der Füllung werden die Schichten zusammengestellt sowie beim mindestens einen geschlossenen Randbereich mit einem Kraftanteil senkrecht zu den aneinander anliegenden Bereichen der Kontaktflächen zu einem zusammenhängenden Käselaib zusammengepresst. Die Füllung kann aus einer Zutat aus der Gruppe von Pilzen, insbesondere Trüffeln, Kräutern, Gewürzen, Gemüsen, Früchten und Oliven hergestellt sein. Die Füllung kann einen Anteil der beim Ausbilden der Vertiefungen entnommenen Käsemasse umfassen, wobei diese Käsemasse zu einer cremigen insbesondere viskosen Konsistenz verarbeitet wird, damit eine gute Mischbarkeit mit mindestens einem anderen Anteil der Füllung gewährleistet ist. Nachteilig am Verfahren ist der grosse Aufwand und ein erhöhtes Risiko von bakteriologischen Verunreinigungen.

GB2312368 beschreibt ein ähnliches Verfahren zur Herstellung eines Käses aus zwei mit unterschiedlicher Rezeptur gefertigter Käsemassen, wobei die erste Käsemasse von der zweiten Käsemasse umhüllt ist. Dazu werden zwei fertige Käse zerkleinert und anschliessend in der gewünschten Form zusammengefügt. Beispiele für die erste resp. zweite Käsemasse sind ein Cheddar (yellow Cheddar) respektive ein Chester-Käse (white Cheshire cheese). Nachteilig am Verfahren ist der grosse Aufwand und ein erhöhtes Risiko von bakteriologischen Verunreinigungen.

DE7737795 U1 beschreibt ein Käseerzeugnis aus zwei mit unterschiedlicher Rezeptur gefertigter Käsemassen, wobei die erste Käsemasse von der zweiten Käsemasse umhüllt ist. Das Käseerzeugnis besteht aus einem Block aus Schmelzkäse oder Schmelzkäsezubereitung und mindestens einer darin eingelagerten Schicht eines Naturkäses (Edelpilzkäses). Schmelzkäse ist ein aus Käse durch Schmelzen unter Anwendung von Wärme, auch unter Verwendung von Schmelzsalzen, hergestelltes Erzeugnis. Nachteilig am Verfahren ist der grosse Aufwand und durch die Verarbeitung zu Schmelzkäse verliert die Käsemasse der äusseren Hülle die natürlichen gewünschten Geschmack.

Aus EP2564691A1 ist ein Verfahren zum Verteilen von Lebensmittelstücken in einem Käselaib mit folgenden Schritten bekannt: a) Abfüllen einer ersten Teilmenge von einer Gesamtmenge an Käsebruchmasse aus einem Behälter in eine definierte Anzahl von Käseformen, wobei jede der Käseformen jeweils ein bestimmtes Volumen aufweist; b) Zufügen eines ersten Anteils eines Gesamtanteils der Lebensmittelstücke in die im Behälter verbleibende Menge der Käsebruchmasse und Mischen der Lebensmittelstücke mit der Käsebruchmasse; c) Abfüllen einer zweiten Teilmenge der Käsebruchmasse aus Schritt b) in die Käseformen; d) Zufügen des restlichen Anteils der Lebensmittelstücke in die restliche im Behälter verbliebene Käsebruchmasse; e) Abfüllen der gemäss Schritt d) erhaltenen Käsebruchmasse in die Käseformen. Dadurch wird erreicht, dass die zugefügten Lebensmittelstücke gleichmässig im Innern des Käselaibes bis nahe an die Aussenseite des Käse bzw. der Käserinde heran verteilt werden können, ohne dass dabei Lebensmittelstücke aus der äusseren Oberfläche bzw. Rinde der Käselaibe hervortreten.

EP2238838 beschreibt ein Verfahren zur Herstellung eines Lebensmittelprodukts mit Mehrfachtextur. Dabei wird ein Molkereiprodukt, z.B. ein Frischkäse oder Schmelzkäse, gefroren und anschliessend begast. Das gefrorene, begaste Molkereiprodukt wird zwischen zwei Schichten eines nicht begasten Molkereiprodukts gelegt. Als nicht begaste Molkereiprodukte werden Doppelrahmkäse (cream cheese) oder Schmelzkäse (processed cheese) verwendet. Nachteilig am Verfahren ist der grosse Aufwand, insbesondere das Gefrieren und Begasen. Solche Prozessschritte sind nicht erwünscht.

FR2867951 beschreibt ein Verfahren, bei welchem eine Füllung in einen Käse, d.h. nach der Behandlung des Käsebruchs, mit einer Kanüle injiziert wird. Das Verfahren ist aufwendig und lässt nur fliessfähige Füllungen zu.

### Darstellung der Erfindung

Eine Aufgabe der Erfindung ist es, ein einfaches und rationelles Verfahren zur Herstellung eines natürlichen Käses mit in sich unterschiedlichen Geschmacksrichtungen und / oder Konsistenzen anzugeben, welches eine geringe Gefahr für Kontaminationen aufweist.

Diese Aufgabe wird durch ein Verfahren mit den Merkmalen des Anspruch 1 gelöst. Das Verfahren zur Herstellung eines Käse aus zwei mit unterschiedlicher Rezeptur gefertigter Käsemassen, wobei eine erste Käsemasse einen Kern des Käse ausbildet und wobei eine zweite Käsemasse eine Hülle des Käse ausbildet, welche den Kern vollständig umhüllt, umfasst die folgenden Schritte: (a) Herstellung eines ersten Käsebruchs gemäss einer ersten Rezeptur und eines zweiten Käsebruchs gemäss einer zweiten Rezeptur, die sich von der ersten Rezeptur unterscheidet; (b) Behandeln des ersten Käsebruchs und Formen eines ersten Käselaibs aus dem ersten Käsebruch; (c) Bereitstellen einer Käseform und Abfüllung einer ersten Teilmenge des zweiten Käsebruchs in die Käseform; (d) Einlegen des ersten Käselaibs in die Käseform auf die erste Teilmenge des zweiten Käsebruchs zur Ausbildung des Kerns; (e) Abfüllung einer zweiten Menge des zweiten Käsebruchs in die Form zur vollständigen Umhüllung des Kerns; (f) Pressen des abgefüllten zweiten Käsebruchs zu einem Käse mit dem eingeschlossenen Kern aus der ersten Käsemasse, wobei der Kern vollständig von der Hülle aus der zweiten Käsemasse umhüllt ist.

Auf diese Weise kann in einem einfachen und rationellen Verfahren ein natürlicher Käse aus zwei oder mehr unterschiedlichen Käsemassen hergestellt werden, dessen Kern sich optisch und sensorisch von der umgebenden Hülle unterscheidet. Der Kern kann auch aus mehreren Teilkernen gleicher oder unterschiedlicher Rezeptur ausgebildet sein. Dabei können verschiedene Sorten und Geschmackrichtungen von Käse kombiniert werden.

Zudem kann das Verfahren unter den herkömmlichen Bedingungen mit den entsprechenden Hygienemassnahmen durchgeführt werden. Die Gefahr einer Verunreinigung, wie dies beispielsweise beim Aufschneiden einer Käsemasse zum Einbringen einer Füllung der Fall ist, wird erheblich reduziert.

Unter dem Begriff Käsebruch wird, wir bereits voran erklärt, dickgelegte Milch gemeint, nachdem sie zerteilt resp. gebrochen wurde, um die Molke abzutrennen. Ein Käselaib wird direkt aus dem Käsebruch entweder durch sein eigenes Gewicht oder durch Pressen geformt. Unter einem natürlichen Käse resp. einem Naturkäse wird ein Käse verstanden, dessen Käsemasse ohne Schmelzen, Gefrieren, Begasen oder dergleichen hergestellt und verarbeitet wird.

Die Rezepturen können sich beispielsweise in der Art der Milch, der eingesetzten Milchsäurebakterien und deren Enzyme, der Vorbehandlung der Milch, der Dicklegung der Milch, der weiteren Bruchbehandlung der dickgelegten Milch oder durch zusätzliche Zutaten (z.B. Kräuter) unterscheiden.

In einigen Ausführungsformen kann der erste Käsebruch mittels Entsirten, Vorpressen, Formen und Nachpressen zu einem ersten Käselaib verarbeitet wird.

In einigen Ausführungsformen kann der erste Käselaib zur Ausbildung des Kerns durch Salzen, Reifen und/oder Affinage behandelt werden.

In einigen Ausführungsformen kann der Kern bzw. die erste Käsemasse ein Hart-, Halbhart-, Weich- oder Frischkäse sein.

In einigen Ausführungsformen kann die Hülle bzw. die zweite Käsemasse ein Hart-, Halbhart- oder Weichkäse sein.

In einigen Ausführungsformen kann die erste Käsemasse und/oder die zweite Käsemasse mit Zutaten ausgewählt aus der Gruppe von Gewürze, Aromen, Nüsse, Gemüse- oder Früchtestücke, Beeren und Kombinationen davon versetzt sein.

In einigen Ausführungsformen kann der Käse, bestehend aus der ersten und zweiten Käsemasse, durch Salzen, Reifung und/oder Affinage behandelt werden.

In einigen Ausführungsformen kann sich die Ausgangsmilch (Kesselmilch) für die erste Käsemasse und die zweite Käsemasse bezüglich Tierart, e.g. Kuh, Schaf, Ziege, Büffel, usw., und/oder der Vorbehandlung, z.B. Erhitzung, Fettgehalteinstellung, Beigabe von Milchsäurebakterien, Enzymen oder weiteren geschmacksgebenden Zutaten, unterscheiden.

In einigen Ausführungsformen kann der Kern aus mehreren Teilkernen ausgebildet sein, wobei einzelne Teilkerne aus Käsebruch gleicher oder unterschiedlicher Rezeptur hergestellt sein können.

Der Käse umfasst zwei mit unterschiedlicher Rezeptur gefertigter Käsemassen, wobei eine erste Käsemasse einen Kern des Käses ausbildet und wobei eine zweite Käsemasse eine Hülle des Käses ausbildet, welche den Kern vollständig umhüllt. Die erste Käsemasse ist ein aus einem ersten Käsebruch geformter Käselaib und die zweite Käsemasse ist aus einem zweiten Käsebruch gefertigt, welcher den aus dem ersten Käsebruch geformten Käselaib umhüllt und zu einem Käse gepresst ist. Der Käse ist durch Salzen, Reifen und/oder Affinage behandelt. Der Kern kann ein Hart-, Halbhart-, Weich- oder Frischkäse sein. Die Hülle kann ein Hart-, Halbhart- oder Weichkäse sein.

### Kurze Erläuterung zu den Figuren

Die Erfindung soll nachfolgend anhand von Ausführungsbeispielen im Zusammenhang mit der(n) Zeichnung(en) näher erläutert werden. Es zeigen:

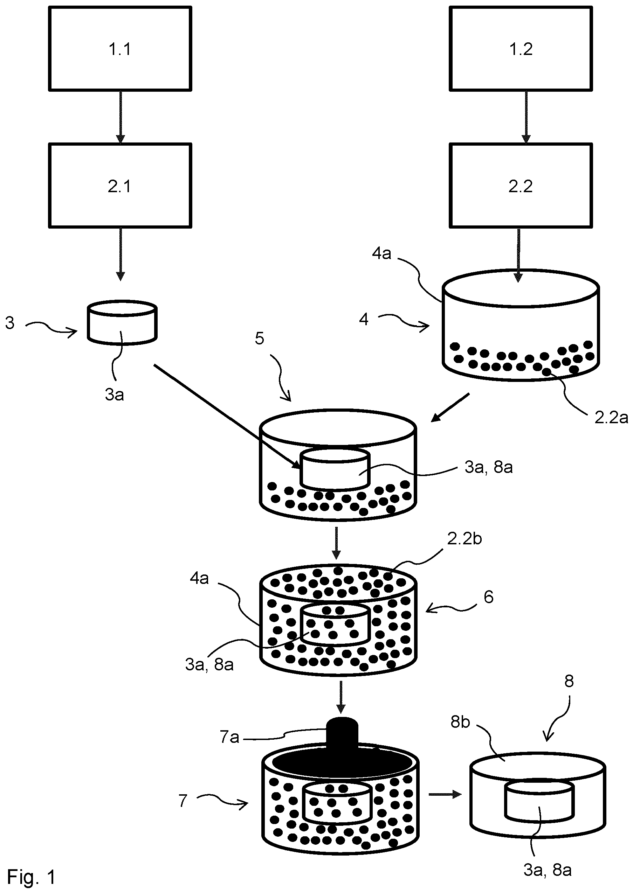

Fig. 1 eine schematische Darstellung der Verfahrensschritte.

### Wege zur Ausführung der Erfindung

In Fig. 1 ist eine schematische Darstellung der einzelnen Schritte zur Herstellung eines Käse gezeigt. Der Käse umfasst zwei mit unterschiedlicher Rezeptur gefertigte Käsemassen, wobei eine erste Käsemasse einen Kern 8a des Käses ausbildet und wobei eine zweite Käsemasse eine Hülle 8b ausbildet und die erste Käsemasse resp. den Kern 8a vollständig umhüllt.

Zur Herstellung der beiden Käsemassen werden nach den üblichen Verfahrensschritten 1.1, 1.2, 2.1, 2.2 ein erster Käsebruch und eine zweiter Käsebruch hergestellt. Dabei werden für die beiden Käsebrüche unterschiedliche Rezepturen verwendet. Die Rezepturen können sich beispielsweise in der Art der Milch, der eingesetzten Milchsäurebakterien und deren Enzyme, der Vorbehandlung der Milch, der Dicklegung der Milch, der weiteren Bruchbehandlung der dickgelegten Milch oder durch zusätzliche Zutaten (z.B. Kräuter) unterscheiden.

In einem ersten Schritt 1.1, 1.2 der Milchbehandlung wird Kesselmilch für die weitere Verwendung vorbereitet. Dabei wird in der Regel die Kesselmilch gereinigt und der Fettgehalt wird eingestellt. Gegebenenfalls wird eine Wärmebehandlung, wie die Thermisation oder Pasteurisation und/oder eine Baktofugation durchgeführt. Auch können in dem Schritt Zutaten wie Kräuter, Gewürze, Aromen beigegeben werden.

Anschliessend folgt in einem zweiten Schritt 2.1, 2.2 jeweils die eigentliche Herstellung des Käsebruchs, in dem die vorbehandelte Milch mit Milchsäurebakterie versetzt und dickgelegt wird. Die dickgelegte Milch wird mit speziellen Schneidewerkzeugen in Würfel unterschiedlicher Grösse geschnitten, es entsteht der Käsebruch. Bei der weiteren Bearbeitung kann der Bruch gerührt und gleichzeitig nach einem vorgegebenen Rezept auf bestimmte Temperaturen erwärmt werden. Dabei tritt Synärese auf, d.h die Bruchkörner ziehen sich zusammen und geben Molke ab. Bevorzugt wird ein Käsebruch für einen Hart-, Halbhart- oder Weichkäses unter Verwendung von Lab hergestellt. Es ist auch möglich für den Kern einen ersten Käsebruch für einen Frischkäse herzustellen.

In Schritt 3 wird der erste Käsebruch aus Schritt 1.2 zu einem ersten Käselaib 3a dem späteren Kern 8a des fertigen Käse geformt. Dies geschieht in der Regel durch Entsirten, Vorpressen, Formen und Nachpressen. Der Käselaib resp. der Kern 8a kann mittels Salzen und/oder mit Reifen weiterbehandelt werden.

In Schritt 4 wird eine erste Teilmenge 2.2a des zweiten Käsebruchs aus Schritt 2.2 in eine perforierte Käseform 4a gefüllt. Die Menge ist abhängig von der gewünschten Lage des Kerns 3a im fertigen Käse.

In Schritt 5 wird der zuvor aus dem ersten Käsebruch des Schritts 2.1 hergestellte Käselaib 3a auf die erste Teilmenge 2.2a des zweiten Käsebruchs in die Käseform gelegt. Der Käselaib bildet später den Kern 8a des fertigen Käses aus.

In Schritt 6 wird nun die restliche Teilmenge 2.2b des zweiten Käsebruchs in die Käseform gefüllt, um den Kern 8a vollständig zu umhüllen.

In Schritt 7 wird der Käsebruch aus Schritt 2.2 mit dem darin eingeschlossenen Kern 8a zum eigentlichen fertigen Käse gepresst (Presse 7a). Durch das Pressen erhält der Käse seine endgültige Form und eine feste Oberfläche.

Der fertige Käse wird aus der Käseform genommen (Schritt 8) und weist nun einen Kern 8a aus der ersten Käsemasse, die aus dem ersten Käsebruch hergestellt wurde, und eine den Kern 8a umhüllende Hülle 8b aus der zweiten Käsemasse, die aus dem zweiten Käsebruch hergestellt wurde, auf.

Der fertige Käse kann z.B. durch Salzen, Reifen und/oder Affinage gemäss bekannten Verfahren weiterverarbeitet werden.

### Bezeichnungsliste

- 1.1, 1.2: Milchbehandlung
- 2.1, 2.2: Herstellung des Käsebruchs
- 2.2a: erste Teilmenge des zweiten Käsebruchs
- 2.2b: zweite Teilmenge des zweiten Käsebruchs
- 3: Herstellung des Kerns
- 3a: erster Käselaib
- 4: Abfüllen einer ersten Teilmenge des zweiten Käsebruchs
- 4a: Käseform
- 5: Einlegen des ersten Käselaibs
- 6: Abfüllen einer zweiten Teilmenge des zweiten Käsebruchs
- 7: Pressen
- 8: Entformen
- 8a: Kern
- 8b: Hülle

## Patentansprüche

1. Verfahren zur Herstellung eines Käse aus zwei mit unterschiedlicher Rezeptur gefertigter Käsemassen, wobei eine erste Käsemasse einen Kern (8a) des Käse ausbildet und wobei eine zweite Käsemasse eine Hülle (8b) des Käse ausbildet, welche den Kern (8a) vollständig umhüllt, umfassend die folgenden Schritte:
a. Herstellung eines ersten Käsebruchs gemäss einer ersten Rezeptur (1.1, 1.2,) und eines zweiten Käsebruchs gemäss einer zweiten Rezeptur (2.1, 2.2), die sich von der ersten Rezeptur unterscheidet;
b. Behandeln (3) des ersten Käsebruchs und Formen eines ersten Käselaibs (3a) aus dem ersten Käsebruch;
c. Bereitstellen (4) einer Käseform (4a) und Abfüllung (4) einer ersten Teilmenge (2.2a) des zweiten Käsebruchs in die Käseform (4a);
d. Einlegen (5) des ersten Käselaibs (3a) in die Käseform (4a) auf die erste Teilmenge (2.2a) des zweiten Käsebruchs zur Ausbildung des Kerns (8a);
e. Abfüllung (6) einer zweiten Menge (2.2b) des zweiten Käsebruchs in die Käseform (4a) zur vollständigen Umhüllung des Kerns (8a);
f. Pressen (7) des abgefüllten zweiten Käsebruchs zu einem Käse mit dem eingeschlossenen Kern (8a) aus der ersten Käsemasse, wobei der Kern (8a) vollständig von der Hülle (8b) aus der zweiten Käsemasse umhüllt ist.

2. Verfahren nach Anspruch 1, **dadurch gekennzeichnet, dass** der erste Käsebruch mittels Entsirten, Vorpressen, Formen und Nachpressen zu einem ersten Käselaib (3a) verarbeitet wird.

3. Verfahren nach einem der vorangehenden Ansprüche, **dadurch gekennzeichnet, dass** der erste Käselaib (3a) zur Ausbildung des Kerns (8a) mittels Salzen, Reifen und/oder Affinage behandelt wird.

4. Verfahren nach einem der vorangehenden Ansprüche, **dadurch gekennzeichnet, dass** der Kern (8a) ein Hart-, Halbhart-, Weich- oder Frischkäse ist.

5. Verfahren nach einem der vorangehenden Ansprüche, **dadurch gekennzeichnet, dass** die Hülle (8b) ein Hart-, Halbhart- oder Weichkäse ist.

6. Verfahren nach einem der vorangehenden Ansprüche, **dadurch gekennzeichnet, dass** die erste Käsemasse und/oder die zweite Käsemasse mit Zutaten ausgewählt aus der Gruppe von Gewürze, Aromen, Nüsse, Gemüse- oder Früchtestücke, Beeren und Kombinationen davon versetzt ist.

7. Verfahren nach einem der vorangehenden Ansprüche, **dadurch gekennzeichnet, dass** der Käse durch Salzen, Reifen und/oder Affinage behandelt wird.

8. Verfahren nach einem der vorangehenden Ansprüche, **dadurch gekennzeichnet, dass** der Kern aus mehreren Teilkernen ausgebildet ist, wobei einzelne Teilkerne aus Käsebruch gleicher oder unterschiedlicher Rezeptur hergestellt sind.

9. Käse aus zwei mit unterschiedlicher Rezeptur gefertigter Käsemassen, wobei eine erste Käsemasse einen Kern (8a) des Käses ausbildet und wobei eine zweite Käsemasse eine Hülle (8b) des Käses ausbildet, welche den Kern (8a) vollständig umhüllt, wobei die erste Käsemasse ein aus einem ersten Käsebruch geformter Käselaib (3a) ist, **dadurch gekennzeichnet, dass** die zweite Käsemasse aus einem zweiten Käsebruch (2.2a, 2.2b) gefertigt ist, welcher den aus dem ersten Käsebruch geformten Käselaib (3a) umhüllt und zu einem Käse gepresst ist, und dass der Käse durch Salzen, Reifen und/oder Affinage behandelt ist.

10. Käse nach Anspruch 9, **dadurch gekennzeichnet, dass** der Kern (8a) ein Hart-, Halbhart-, Weich- oder Frischkäse und die Hülle (8b) ein Hart-, Halbhart- oder Weichkäse ist.

## Claims

1. A method for producing a cheese from two cheese masses manufactured with a different recipe, wherein a first cheese mass forms a core (8a) of the cheese, and wherein a second cheese mass forms a casing (8b) of the cheese, which fully encases the core (8a), said method comprising the following steps:
a. producing a first curd according to a first recipe (1.1, 1.2) and a second curd according to a second recipe (2.1, 2.2), which differs from the first recipe;
b. treating (3) the first curd and forming a first cheese loaf (3a) from the first curd;
c. providing (4) a cheese mould (4a) and filling (4) a first sub-quantity (2.2a) of the second curd into the cheese mould (4a);
d. placing (5) the first cheese loaf (3a) into the cheese mould (4a) onto the first sub-quantity (2.2a) of the second curd to form the core (8a);
e. filling (6) a second quantity (2.2b) of the second cheese curd into the cheese mould (4a) to completely encase the core (8a);
f. pressing (7) the filled second cheese curd to form a cheese comprising the enclosed core (8a) formed of the first cheese mass, wherein the core (8a) is fully encased by the casing (8b) formed of the second cheese mass.

2. The method according to claim 1, **characterised in that** the first cheese curd is processed by means of dewheying, pre-pressing, shaping and post-pressing to form a first cheese loaf (3a).

3. The method according to any one of the preceding claims, **characterised in that** the first cheese loaf (3a) is treated to form the core (8a) by means of salting, maturing and/or affinage.

4. The method according to any one of the preceding claims, **characterised in that** the core (8a) is a hard, semi-hard, soft or cream cheese.

5. The method according to any one of the preceding claims, **characterised in that** the casing (8b) is a hard, semi-hard or soft cheese.

6. The method according to any one of the preceding claims, **characterised in that** ingredients selected from the group of spices, flavourings, nuts, vegetable or fruit pieces, berries and combinations thereof are blended with the first cheese mass and/or the second cheese mass.

7. The method according to any one of the preceding claims, **characterised in that** the cheese is treated by salting, maturing and/or affinage.

8. The method according to any one of the preceding claims, **characterised in that** the core is formed from a plurality of sub-cores, wherein individual sub-cores are produced from cheese curd of the same or different recipe.

9. A cheese formed of two cheese masses manufactured with different recipes, wherein a first cheese mass forms a core (8a) of the cheese, and wherein a second cheese mass forms a casing (8b) of the cheese, which fully encases the core (8a), wherein the first cheese mass is a cheese loaf (3a) formed from a first cheese curd, **characterised in that** the second cheese mass is manufactured from a second cheese curd (2.2a, 2.2b), which encases the cheese loaf (3a) formed from the first cheese curd and is pressed to form a cheese, and **in that** the cheese is treated by salting, maturing and/or affinage.

10. The cheese according to claim 9, **characterised in that** the core (8a) is a hard, semi-hard, soft or cream cheese and the casing (8b) is a hard, semi-hard or soft cheese.

## Revendications

1. Procédé qui est destiné à fabriquer un fromage à partir de deux masses fromagères réalisées selon des recettes différentes, une première masse fromagère constituant un noyau (8a) dudit fromage et une seconde masse fromagère constituant une enveloppe (8b) dudit fromage alors qu'elle vient entourer intégralement le noyau (8a), et qui comprend les étapes consistant à :
a. préparer un premier caillé selon une première recette (1.1, 1.2) et un second caillé selon une seconde recette (2.1, 2.2) qui est différente de la première recette ;
b. traiter (3) le premier caillé et former, à partir du premier caillé, une première tomme (3a) ;
c. mettre à disposition (4) un moule à fromage (4a) et introduire (4) une première quantité partielle (2.2a) du second caillé dans le moule à fromage (4a) ;
d. disposer (5) la première tomme (3a), au sein du moule à fromage (4a), sur la première quantité partielle (2.2a) du second caillé afin de constituer le noyau (8a) ;
e. introduire (6) une seconde quantité (2.2b) du second caillé dans le moule à fromage (4a) afin d'entourer intégralement le noyau (8a) ;
f. presser (7) le second caillé, suite à son introduction, pour ainsi obtenir un fromage ayant un noyau (8e) enfermé et réalisé à partir de la première masse fromagère, le noyau (8a) étant intégralement enveloppé par l'enveloppe (8b) réalisée à partir de la seconde masse fromagère.

2. Procédé selon la revendication 1, **caractérisé en ce que** le premier caillé est traité par écoulement du lactosérum, pressage préalable, mise en forme et pressage ultérieur, pour ainsi obtenir une première tomme (3a).

3. Procédé selon l'une des revendications précédentes, **caractérisé en ce que** la première tomme (3a) est traitée, pour constituer le noyau (8a), par ajout de sel, maturation et/ou affinage.

4. Procédé selon l'une des revendications précédentes, **caractérisé en ce que** le noyau (8a) est un fromage à pâte dure, demi-dure ou molle, ou bien un fromage frais.

5. Procédé selon l'une des revendications précédentes, **caractérisé en ce que** l'enveloppe (8b) est un fromage à pâte dure, demi-dure ou molle.

6. Procédé selon l'une des revendications précédentes, **caractérisé en ce que** la première masse fromagère et/ou la seconde masse fromagère est enrichie en ingrédients choisis dans le groupe des épices, des arômes, des fruits à coque, des morceaux de légumes ou de fruits, de baies et leurs combinaisons.

7. Procédé selon l'une des revendications précédentes, **caractérisé en ce que** ledit fromage est traité par ajout de sel, maturation et/ou affinage.

8. Procédé selon l'une des revendications précédentes, **caractérisé en ce que** ledit noyau est constitué de plusieurs noyaux partiels, les noyaux partiels étant chacun préparés à partir de caillés d'une même composition ou de compositions différentes.

9. Fromage constitué de deux masses fromagères réalisées selon des recettes différentes, la première masse fromagère formant un noyau (8a) dudit fromage et la seconde masse fromagère formant une enveloppe (8b) dudit fromage, celle-ci venant entourer intégralement le noyau (8a), la première masse fromagère étant une tomme (3a) formée à partir d'un premier caillé, **caractérisé en ce que** la seconde masse fromagère est préparée à partir d'un second caillé (2.2a, 2.2b) lequel vient entourer la tomme (3a) formée à partir du premier caillé et lequel a été pressé pour obtenir un fromage et que ledit fromage a été traité par ajout de sel, maturation et/ou affinage.

10. Fromage selon la revendication 9, **caractérisé en ce que** le noyau (8a) est un fromage à pâte dure, demi-dure ou molle ou bien un fromage frais et l'enveloppe (8b) est un fromage à pâte dure, demi-dure ou molle.
